# EUROPÄISCHE PATENTSCHRIFT

(11) **EP 1 043 224 B1**
(45) Veröffentlichungstag und Bekanntmachung des Hinweises auf die Patenterteilung: **11.09.2002**
(21) Anmeldenummer: 00101750.8
(22) Anmeldetag: 28.01.2000
(51) Int. Cl.: B64C 9/24, B64C 9/36, B64C 7/00

(54) **Flugzeugtragfläche mit einer Vorderkantenklappe und mit mindestens einem Triebwerk in flügelnaher Lage**
Aircraft wing with a leading edge flap and with at least one engine close to the wing
Aile d'aéronef avec un volet de bord d'attaque et avec au moins un moteur près de l'aile

(30) Priorität: 10.03.1999 DE 19910551
(43) Veröffentlichungstag der Anmeldung: 11.10.2000
(73) Patentinhaber: Airbus Deutschland GmbH, 21129 Hamburg (DE)
(72) Erfinder: May, Peter, 28307 Bremen (DE)
(74) Vertreter: Hansmann, Dierk, Dipl.-Ing.

(56) Entgegenhaltungen:
- DE-C- 19 743 907
- GB-A- 2 144 688
- US-A- 3 968 946
- US-A- 4 637 573

## Beschreibung

Die Erfindung betrifft eine Flugzeugtragfläche mit mindestens einem kurzgekoppelten Triebwerk in flügelnaher Lage und einem als Hochauftriebshilfe dienenden klappenähnlichen Auftriebselement, das vor die Tragfläche in einen offenen Bereich ausfahrbar ist, der durch einen Triebwerkspylon, die seitliche Außenkante einer an der Innenseite des Pylons ausfahrbaren Vorderkantenklappe des Hochauftriebssystems, vorzugsweise Vorflügel, Krüger-Klappe, Knicknase o.a., und den zwischen beiden liegenden Abschnitt der Flügelnase begrenzt ist.

Bei Flugzeugen mit sogenannten Vorderkantenhilfen - also als Hochauftriebshilfen aerodynamisch wirksame, bewegliche Bauteile an der Flügelvorderkante wie z.B. Slats und Krüger-Klappen - stellt der Anschlußbereich der Triebwerke an den Flügel eine besondere Problemzone dar. Größe und Lage der Triebwerksgondeln in Relation zum Flügel begrenzen entweder die Größe, die spannweitige Ausdehnung und/oder die Einstellmöglichkeiten dieser Bauteile. Sollen z. B. für die Landekonfiguration eine bestimmte Tiefe der Vorderkantenhilfe und ein vorgegebener Ausschlagwinkel verwirklicht werden, so muß in der Regel deren spannweitige Ausdehnung reduziert werden.

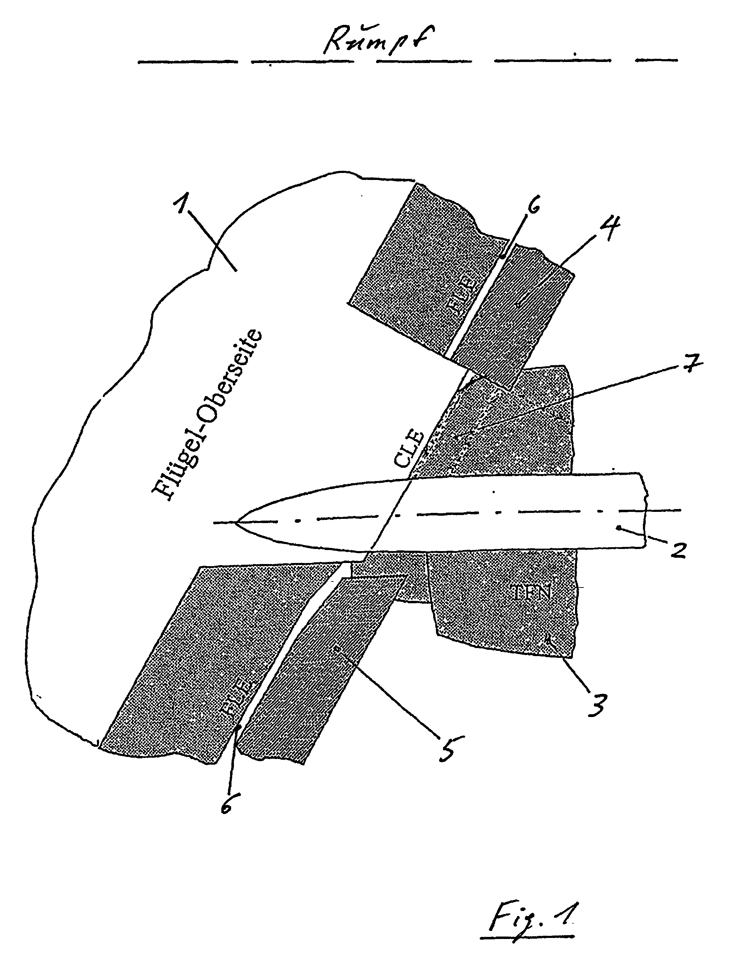

Daraus ergibt sich, daß ein Teil der Flügelvorderkante nicht zur Auftriebssteigerung genutzt werden kann. Der obige "Offene Bereich", der aus Fig. 1 ersichtlich und dort mit 7 bezeichnet ist, verursacht aerodynamische Verluste, die durch aufwendige Detaillösungen ausgeglichen werden. Hierzu sind beispielsweise die folgenden zwei Lösungen bekannt:
- In den "Offenen Bereich" einbringbare zusätzliche und separat gesteuerte Klappe, die aus der Flügelkontur herausfahrbar oder herausklappbar ist. Eine derartige, mit einem verhältnismäßig großen Aufwand an Mechanik verwirklichte Klappenanordnung ist in der DE 197 43 907 C1 beschrieben.
- Eine vollständige spannweitige Erstreckung einer Vorderkantenhilfe mit einem Freigang zwischen Pylon- und Triebwerkskontur mittels sogenannter "Notch"-Lösung. Da hierbei der Freigang des spannweitig erstreckten Klappenteiles, beispielsweise das spannweitig gesehene Endteil eines an der Innenseite des Triebwerkspylons ausgefahrenen Vorflügels, dem größten Ausschlag (für die Landestellung) angepaßt werden muß, reduziert sich nachteiligerweise die Wirksamkeit dieser Hochauftriebshilfe bei kleineren Ausschlägen, beispielsweise bei der Startkonfiguration.

Aus der US-PS 4,540,143 ist eine Triebwerks-Flügel-Anordnung bekannt, bei der die Gondel des Triebwerkes Strömungsleitflächen an ihrer Außenkontur aufweist. Diese Leitflächen dienen zur Beeinflussung einer turbulenten Tragflächenumströmung, die an dem oberen vorderen Nasenteil der Gondel entsteht.

Der Erfindung liegt nun die Aufgabe zugrunde, eine Anordnung der eingangs genannten Art zu schaffen, mit der wesentliche Verbesserungen bezüglich Konstruktionsaufwand, Gewicht und Baukosten gegenüber den bisher bekannten Vorrichtungen erzielt werden.

Die Aufgabe wird erfindungsgemäß dadurch gelöst, daß das klappenähnliche Auftriebselement als ein bewegliches, im eingefahrenen Zustand in die Außenkontur von Triebwerksgondel und/oder Pylon integriertes Bauteil ausgebildet ist, und daß das bewegliche Bauteil im ausgefahrenen Zustand den triebwerksbedingten offenen Bereich aerodynamisch verschließt.

Eine vorteilhafte Weiterbildung der Erfindung ist in einem derart profilierten beweglichen Bauteil zu sehen, daß der maximale Auftrieb und der kritische Anstellwinkel erhöht werden.

In der Zeichnung ist ein Ausführungsbeispiel nach der Erfindung dargestellt, und zwar zeigen:
- Fig. 1: einen Ausschnitt einer Flugzeugtragfläche mit einem, mit Hilfe eines Pylons an der Tragfläche befestigten Triebwerk zur Demonstration des beschriebenen offenen Bereiches (auch "Cut-Out-Bereich" genannt) in Draufsicht,
- Fig. 2: eine Anordnung gemäß Fig. 1 in Draufsicht, bei der der offene Bereich durch ein bewegliches klappenähnliches Auftriebselement aerodynamisch verschlossen ist, und
- Fig. 3: eine graghische Darstellung von Meßwerten.

In Fig. 1 ist ein Ausschnitt einer rechten Flugzeugtragfläche 1 mit einem mittels eines Triebwerksplyons 2 befestigten Triebwerk 3 dargestellt. An der inneren, dem zeichnerisch nicht dargestellten Flugzeugrumpf zugewandten Seite des Triebwerks 3 ist ein erster Vorflügel 4 vorgesehen, während sich an der äußeren Seite des Triebwerks 3 ein zweiter Vorflügel 5 befindet. Bei beiden Vorflügeln 4 und 5, die im ausgefahrenen Betriebszustand dargestellt sind, handelt es sich ihrer Art nach um sogenannte Slats, bei denen im dargestellten Zustand zwischen der Vorderkante FLE der Tragfläche 1 und der Hinterkante TE der Vorflügel 4 und 5 jeweils ein Spalt 6 vorhanden ist. Die durch diese Spalte 6 hindurchtretende, stark beschleunigte Luftströmung bewirkt u.a., daß die Grenzschichtdicke auf der Oberseite der Tragfläche 1 verringert wird, was zu einer wesentlichen Vergrößerung des maximal möglichen Anstellwinkels und somit zu einer entsprechenden Erhöhung des maximalen Auftriebs führt. Während der äußere Vorflügel 5 praktisch bis in die unmittelbare Nähe des Pylons 2 reicht, ist zwischen Pylon 2 und dem benachbarten Ende des inneren Vorflügels 4 ein Abstand vorhanden. Dieser Abstand ist durch den äußersten ausgefahrenen Betriebszustand des Vorflügels 4 vorgegeben und führt zu dem bereits eingangs beschriebenen offenen Bereich 7, der durch den Pylon 2, die seitliche Aussenkante des an der Innenseite des Pylons 2 ausfahrbaren Vorflügels 4 und den zwischen beiden liegenden Abschnitt der Flügelnase abgegrenzt ist,

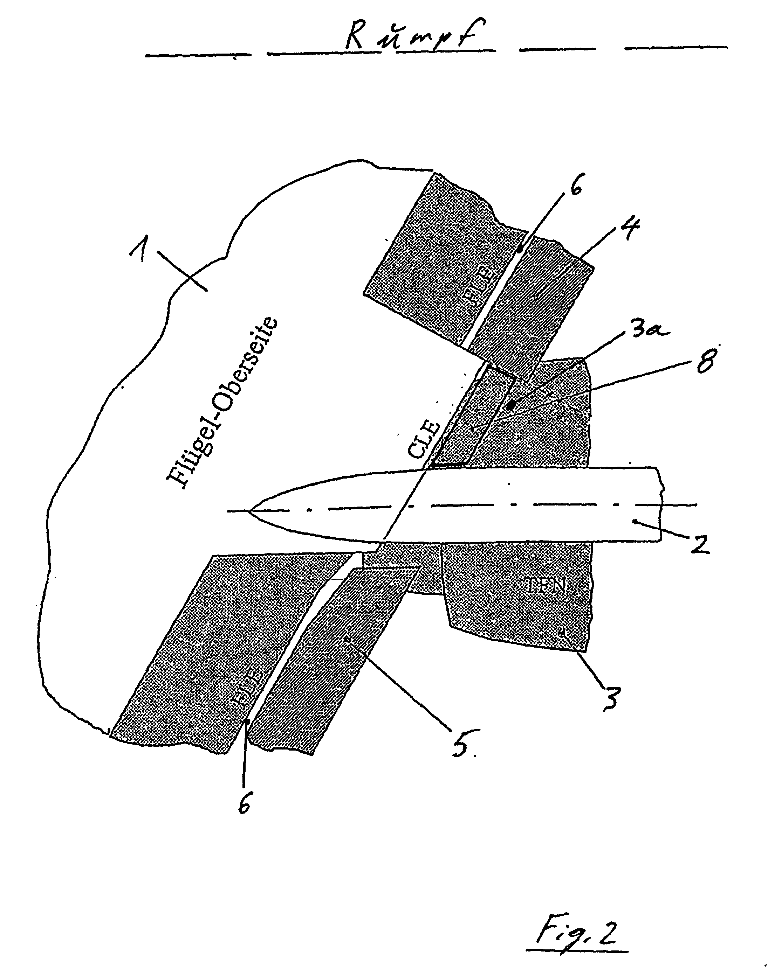

Wie in Fig. 2 gezeigt ist, wird der triebwerksbedingte offene Bereich 7 durch ein als klappenähnliches Auftriebselement ausgebildetes bewegliches Bauteil 8, welches im ausgefahrenen Betriebszustand dargestellt ist, aerodynamisch verschlossen. Dieses Bauteil 8 ist im eingefahrenen Zustand in die Außenkontur 3a der Triebwerksgondel 3 und/oder in den Pylon 2 integriert. Es ist vorteilhafterweise derart profiliert, daß der maximale Auftrieb und der kritische Anstellwinkel erhöht werden. Unter dem kritischen Anstellwinkel ist diejenige Größe des Anstellwinkels zu verstehen, bei der eine einsetzende Strömungsablösung zu einer Abnahme des Auftriebswertes führt.

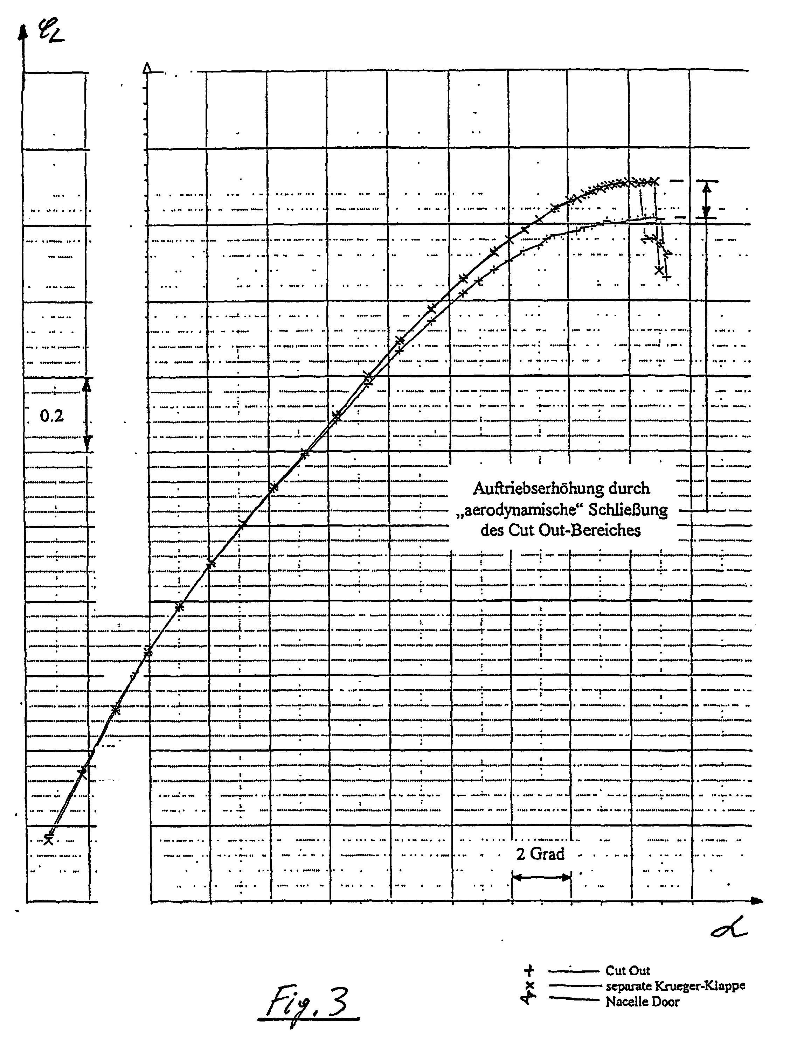

Der graphischen Darstellung aus Fig. 3, in der die Auftriebskoeffizienten C_{L} für verschiedene Anstellwinkel im Vergleich zu entsprechenden Werten einer separaten Krüger-Klappe sowie zu Werten ohne zusätzliche Hochauftriebshilfe im offenen Bereich 7 dargestellt sind, ist die mit der Erfindung erzielte Auftriebserhöhung durch die aerodynamische Schliessung des offenen Bereiches 7 ersichtlich. Die Kurven zeigen eine deutliche Erhöhung des Auftriebes bei Anstellwinkeln von mehr als 10°.

## Patentansprüche

1. Flugzeugtragfläche mit mindestens einem kurzgekoppelten Triebwerk in flügelnaher Lage und einem als Hochauftriebshilfe dienenden klappenähnlichen Auftriebselement, das vor die Tragfläche in einen offenen Bereich ausfahrbar ist, der durch einen Triebwerkspylon, die seitliche Aussenkante einer an der Innenseite des Pylons ausfahrbaren Vorderkantenklappe des Hochauftriebssystems, vorzugsweise Vorflügel, Krüger-Klappe, Knicknase o.a., und den zwischen beiden liegenden Abschnitt der Flügelnase begrenzt ist, **dadurch gekennzeichnet, daß** das klappenähnliche Auftriebselement als ein bewegliches, im eingefahrenen Zustand in die Außenkontur (3a) von Triebwerksgondel (3) und/oder Pylon (2) integriertes Bauteil (8) ausgebildet ist, und daß das bewegliche Bauteil (8) im ausgefahrenen Zustand den triebwerksbedingten offenen Bereich (7) aerodynamisch verschließt.

2. Flugzeugtragfläche nach Anspruch 1, **gekennzeichnet durch** ein derart profiliertes Bauteil (8), daß der maximale Auftrieb und der kritische Anstellwinkel erhöht werden.

## Claims

1. Aircraft aerofoil having at least one close-coupled engine located close to the wing and a flap-like lift element which serves as a high-lift aid and can be extended in front of the aerofoil into an open region which is bounded by an engine pylon, the lateral outer edge of a leading-edge flap belonging to the high-lift system, which flap can be extended on the inner side of the pylon and is preferably a fore-wing, Krüger flap, hinged leading edge or the like, and that section of the nose of the wing which lies between the two, **characterised in that** the flap-like lift element is constructed as a movable component (8) which, in the retracted condition, is integrated into the outer contour (3a) of the engine nacelle (3) and/or pylon (2), and that, in the extended condition, the movable component (8) occludes, in an aerodynamic manner, the open region (7) brought about by the engine.

2. Aircraft aerofoil according to claim 1, **characterised by** a component (8) which is profiled in such a way that the maximum lift and the critical angle of incidence are increased.

## Revendications

1. Surface portante d'un avion avec au moins un réacteur court accouplé près de l'aile et un élément ascensionnel semblable à un clapet servant de volet hypersustentateur, ledit élément pouvant être déployé devant la surface portante jusque dans un segment ouvert délimité par un pylône de réacteur, par l'arête latérale externe d'un clapet à arête avant du système hypersustentateur, amovible sur le côté interne du pylône, de préférence un volet de fente avant, un clapet Krüger, un nez de cassure ou analogue, par le segment du nez de l'aile situé entre le pylône et l'arête latérale, et **caractérisée en ce que** l'élément ascensionnel semblable à un clapet se présente sous la forme d'un élément structurel (8) mobile intégré, en position renfoncée, dans le contour externe (3a) de nacelles réacteurs (3) et /ou de pylônes (2), et **en ce que** l'élément structurel mobile (8), en position déployée, ferme de façon aérodynamique le segment ouvert (7) conditionné par le réacteur.

2. Surface portante conforme à la revendication 1, **caractérisée par** un élément structurel (8) profilé de telle sorte que la poussée verticale maximale et ' l'angle d'attaque critique soient augmentés.
